Europäisches Patentamt

European Patent Office

Office européen des brevets

(19)

(11) Numéro de publication : **0 312 418 B1**

(12) ## FASCICULE DE BREVET EUROPEEN

(45) Date de publication du fascicule du brevet :
18.12.91 Bulletin 91/51

(51) Int. Cl.⁵ : **F22B 37/00, F28F 11/02**

(21) Numéro de dépôt : **88402434.0**

(22) Date de dépôt : **27.09.88**

(54) **Dispositif de pose et d'extraction commandé à distance d'un bouchon d'obturation d'un tube de générateur de vapeur.**

(30) Priorité : **16.10.87 FR 8714326**

(43) Date de publication de la demande :
**19.04.89 Bulletin 89/16**

(45) Mention de la délivrance du brevet :
**18.12.91 Bulletin 91/51**

(84) Etats contractants désignés :
**BE CH DE ES GB LI SE**

(56) Documents cités :
**EP-A- 0 035 911
EP-A- 0 058 850
EP-A- 0 131 792
EP-A- 0 208 479
FR-A- 2 211 721**

(73) Titulaire : **FRAMATOME
Tour Fiat 1, Place de la Coupole
F-92400 Courbevoie (FR)**

(72) Inventeur : **Jacquier, Paul
37 Chemin des Bruyères
F-69160 Tassin la Demi-Lune (FR)**

(74) Mandataire : **Bouget, Lucien et al
Cabinet Lavoix 2, Place d'Estienne d'Orves
F-75441 Paris Cédex 09 (FR)**

## Description

L'invention concerne un dispositif de pose et d'extraction commandé à distance d'un bouchon d'obturation d'un tube d'un générateur de vapeur.

Les générateur de vapeur des réacteurs nucléaires à eau sous pression comportent une enveloppe de forme générale cylindrique à l'intérieur de laquelle une boîte à eau est délimitée par une plaque tubulaire de forte épaisseur sur laquelle est fixé le faisceau de tubes du générateur de vapeur. Chacun des tubes du faisceau comporte deux branches rectilignes parallèles dont les parties d'extrémité sont fixées à l'intérieur de la plaque tubulaire, généralement par dudgeonnage et par soudage.

Dans le générateur de vapeur en service, les tubes sont en contact à la fois avec le fluide primaire du réacteur nucléaire constitué par de l'eau sous pression et avec le fluide secondaire constitué par de l'eau d'alimentation qui se vaporise. Dans les conditions d'exploitation du générateur de vapeur, les tubes sont susceptibles de subir diverses dégradations et en particulier une corrosion par les fluides avec lesquels ils sont en contact. Certains tubes du générateur de vapeur peuvent devenir défectueux en service et présenter par exemple des fissures génératrices de fuites entraînant une contamination de fluide secondaire.

Il est donc nécessaire, pendant les périodes d'entretien du réacteur, d'intervenir sur le générateur de vapeur et d'effectuer le bouchage des tubes présentant des dégradations susceptibles d'entraîner des fuites.

On connait différents procédés et dispositifs permettant de placer un bouchon dans la partie d'extrémité d'un tube d'un générateur de vapeur, depuis la boîte à eau de ce générateur de vapeur.

On peut utiliser par exemple des outillages manuels de bouchage qui nécessitent la présence d'opérateurs à l'intérieur de la boîte à eau qui présente une certaine radio-activité. Le temps d'intervention dans la boîte à eau du générateur de vapeur doit donc être strictement limité et contrôlé.

Il est possible également d'utiliser un dispositif porteur de type connu introduit dans la boîte à eau du générateur de vapeur et susceptible de mettre en place un outillage, dans le prolongement axial des parties d'extrémité des tubes à boucher.

On ne connait cependant pas d'outillage permettant d'effectuer le bouchage d'un tube de façon totalement automatique et commandé à distance.

D'autre part, les procédés et dispositifs de bouchage connus de l'art antérieur, permettent seulement d'obturer le tube de façon définitive sans aucune possibilité de démontage ultérieur du bouchon.

Dans certains cas, il peut être nécessaire d'effectuer le démontage d'un bouchon mis en place dans un tube générateur de vapeur.

Les tubes qui sont situés à la partie centrale du faisceau, présentent une partie cintrée reliant leurs deux branches rectilignes à faible rayon de courbure. Les parties à faibles rayons de courbure, appelées petits cintres, rendent les tubes correspondant particulièrement sensibles à la corrosion à cause de la présence d'une concentration de contraintes relativement forte dans la partie cintrée.

On a donc effectué, à titre préventif, des campagnes de bouchage des tubes de la partie centrale du faisceau, sur certains générateurs de vapeur.

Depuis, des procédés et dispositifs de détensionnement efficaces des petits cintres ont été proposés et il est devenu possible de remettre en service des tubes dont on avait effectué le bouchage préventif.

De plus, on connait également des procédés de réparation efficace des tubes qui permettent de remettre en fonctionnement, après réparation, des tubes dont on avait effectué le bouchage.

Il est donc souhaitable de disposer de procédés et de dispositifs permettant de mettre en place des bouchons démontables dans les tubes d'un générateur de vapeur de d'assurer l'extraction de ces bouchons.

On connait des bouchons de fermeture des tubes d'un générateur de vapeur qui comportent un corps de forme tubulaire fermé à l'une de ses extrémités par un fond et un ensemble de serrage également tubulaire introduit dans l'alésage du corps du bouchon.

Le moyen de serrage peut comporter en particulier un insert en un métal tel que le nickel et un noyau en un alliage de nickel à mémoire de forme, ces deux pièces étant destinées à coopérer pour assurer l'expansion radiale du corps du bouchon et sa fixation dans le tube.

De tels bouchons peuvent être démontés en réalisant l'extraction du noyau, puis l'extraction axiale du corps du bouchon en exerçant une traction produisant une striction permettant son démontage.

On ne connait cependant pas de dispositif commandé à distance qui permette d'effectuer aussi bien la pose que l'extraction d'un tel bouchon.

Le but de l'invention est donc de proposer un dispositif de pose d'extraction commandé à distance, d'un bouchon d'obturation d'un tube d'un générateur de vapeur qui comprend une enveloppe à l'intérieur de laquelle une boîte à eau est délimitée par une plaque tubulaire et un faisceau de tubes ayant chacun deux branches rectilignes dont les parties d'extrémité sont fixées à l'intérieur de la plaque tubulaire et sont accessibles depuis la boîte à eau, le bouchon d'obturation logeable dans une partie d'extrémité du tube à obturer, comportant un corps tubulaire fermé à l'une de ses extrémités par un fond et un moyen de serrage de forme tubulaire insérable dans le corps du bouchon et le dispositif comportant de manière connue, un moyen de manutention disposé dans la boîte à eau, pour son déplacement commandé à distance et sa mise en position par rapport à la partie d'extrémité du tube, dans l'alignement de la direction axiale, de cette partie d'extrémité.

Dans ce but, le dispositif selon l'invention comporte de plus :

— un moyen de déplacement dans la direction axiale fixé sur le moyen de manutention,

— un support fixé sur le moyen de déplacement mobile dans la direction axiale,

— un vérin ayant une chambre solidaire du support et un piston monté mobile dans la chambre, dans la direction axiale,

— un organe de liaison porté par le support ayant des moyens de fixation amovibles au corps du bouchon,

— une tige solidaire en translation axiale du piston du vérin montée coulissante axialement dans le support et comportant une partie d'extrémité ayant des moyens de fixation amovibles au moyen de serrage du bouchon et une surface d'appui destinée à venir en butée sur le fond du bouchon pour son extension par poussée,

— ainsi qu'un moyen d'amenée des bouchons depuis l'extérieur de la boîte à eau, jusqu'à une position voisine du tube dans son alignement axial.

Afin de bien faire comprendre l'invention, on va maintenant décrire, à titre d'exemple non limitatif, en se référant aux figures jointes en annexe, un dispositif de pose d'extraction suivant l'invention et sa mise en oeuvre pour la pose et le démontage d'un bouchon dans un tube de générateur de vapeur à eau sous pression.

— la Fig. 1 est une vue en élévation avec arrachement et coupe partielle d'un générateur de vapeur d'un réacteur nucléaire à eau sous pression ;

— la Fig. 2 est une vue en coupe d'un bouchon d'obturation d'un tube du générateur de vapeur ;

— la Fig. 3 est une vue schématique générale de l'ensemble de l'installation permettant d'effectuer la pose et l'extraction de bouchons d'obturation ;

— la Fig. 4 est une vue schématique du dispositif de pose de d'extraction suivant l'invention ;

— la Fig. 5 est une vue en coupe détaillée d'un partie du dispositif de pose et d'extraction suivant l'invention ;

— la Fig. 6 est une vue à plus grande échelle d'une partie du dispositif en prise avec le noyau d'un bouchon d'obturation ;

— la Fig. 7 est une vue en coupe du moyen d'amenée des bouchons en position de service.

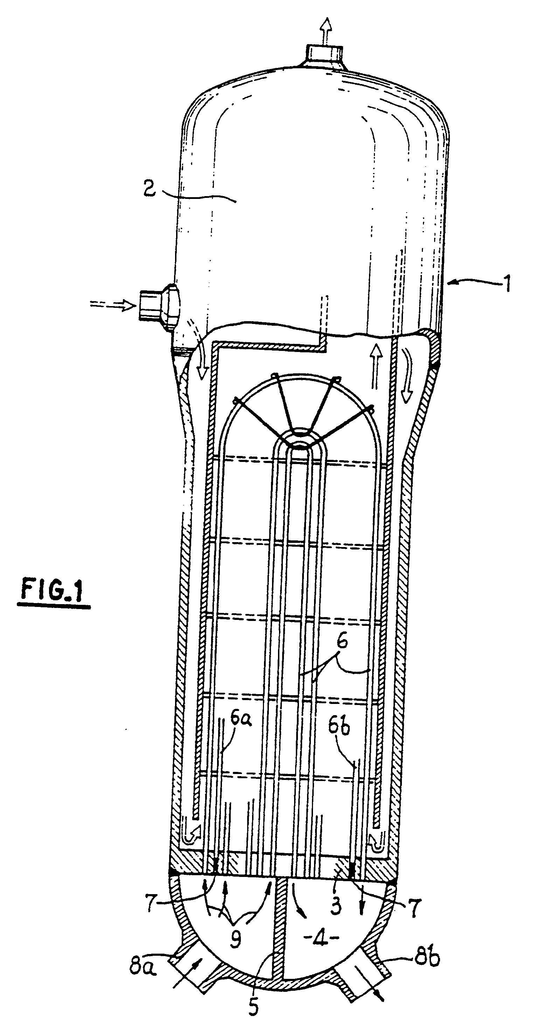

Sur la Fig. 1, on voit un générateur de vapeur désigné de manière générale par le repère 1 et comportant une enveloppe 2 de forme générale cylindrique dans laquelle une plaque tubulaire 3 délimite une boîte à eau 4 en deux parties séparées par une cloison 5. Les tubes 6 du générateur de vapeur constituant le faisceau comportent deux branches rectilignes parallèles de grande longueur reliées par une partie cintrée. Les extrémités des branches rectilignes des tubes sont fixées dans la plaque tubulaire 3 qu'ils traversent sur toute son épaisseur, pour déboucher dans la boîte à eau 4.

On a représenté deux parties d'extrémité 6a et 6b d'un tube dont on a réalisé l'obturation grâce à des bouchons 7. Les bouchons 7 sont mis en place depuis la boîte à eau 4 en utilisant le dispositif suivant l'invention.

L'eau sous pression entrant dans une partie de la boîte à eau par la tubulure 8a et ressortant de la seconde partie de la boîte à eau 4 par une tubulure 8b circule, dans le générateur de vapeur, à l'intérieur du faisceau de tube 6 (flèches 9).

Lorsqu'un tube 6 du faisceau est bouché à ses extrémités, la circulation d'eau sous pression est totalement interrompue dans ce tube.

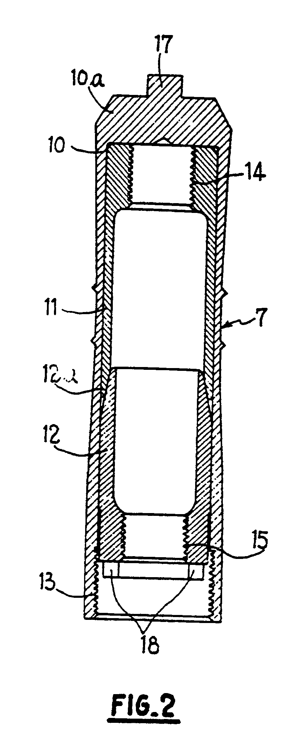

Sur la Fig. 2, on voit un bouchon 7 d'obturation d'un tube du faisceau du générateur de vapeur qui comporte un corps tubulaire 10 fermé à l'une de ses extrémités par un fond 10a, un insert 11 et un noyau 12 également de forme tubulaire qui peuvent être insérés dans le corps 10 comme représenté, pour en assurer l'expansion radiale. Le noyau 12 est réalisé en un alliage de nickel à mémoire de forme et comporte une partie antérieure de forme tronconique 12a destinée à coopérer avec une surface de serrage de forme correspondante de l'insert 11.

La pose du bouchon peut être effectuée en introduisant le corps 10 à l'état non dilaté dans le tube 6, le diamètre extérieur maximal du bouchon étant à l'état non dilaté légèrement inférieur au diamètre intérieur d'un tube 6. L'insert 11 est mis dans sa position représentée sur la Fig. 2 et le noyau 12 est engagé par sa surface tronconique 12a sur la surface de serrage correspondante de l'insert. Par poussée sur le noyau 12, on réalise l'expansion diamétrale du corps 10 et la fixation du bouchon 7 à l'intérieur du tube 6.

Lors de la mise en service du générateur de vapeur, le noyau 12 vient en contact avec de l'eau sous pression à haute température (de l'ordre de 320°C), si bien que l'alliage constituant le noyau 12 atteint une température supérieure à sa température de transition. Le noyau 12 prend alors sa forme haute température qui réalise un dilatation supplémentaire du corps 10 du bouchon 7. On augmente ainsi la force de serrage et l'efficacité de la fixation du bouchon d'obturation dans le tube.

Le corps 10 comporte à sa partie inférieure, une partie taraudée 13 permettant l'assemblage du corps 10 à un moyen de liaison, comme il sera expliqué plus loin.

De même, l'insert 11 et le noyau 12 comportent des parties taraudées d'assemblage respectives identiques 14 et 15 dont le diamètre est inférieur au diamètre de la partie taraudée 13.

Le fond 10a du corps 10 du bouchon comporte une partie en saillie 17 permettant le blocage en rotation du bouchon à l'intérieur du conteneur du moyen d'amenée des bouchons.

Le noyau 12 comporte à sa partie inférieure deux encoches 18 de direction diamètrale permettant le blocage en rotation du noyau sur une partie du dispositif de pose et d'extraction du bouchon.

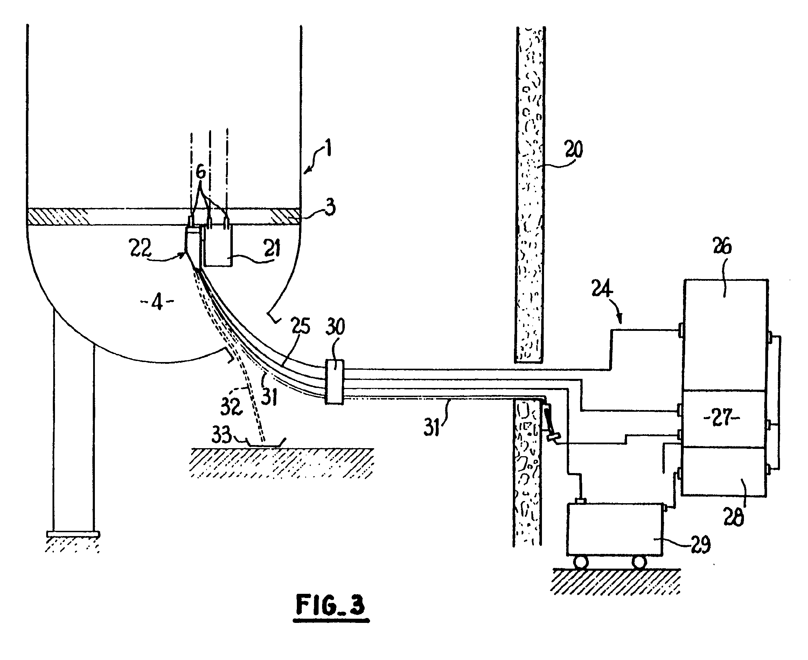

Sur la Fig. 3, on a représenté l'ensemble de l'installation permettant de réaliser la pose et l'extraction de bouchons d'obturation des tubes 6 d'un générateur de vapeur 1.

L'installation comporte un moyen de manutention 21 qui peut être réalisé par un dispositif porteur de type connu introduit dans la boîte à eau 4 du générateur de vapeur permettant de placer un outillage successivement dans l'alignement axial des tubes 6 du faisceau. Ce dispositif porteur 21 peut être constitué par exemple par un bras rotatif mis en position de service dans la partie correspondante de la boîte à eau 4.

Sur le moyen manutention 21 est fixé un ensemble de pose et d'extraction de bouchons 22 relié par un ensemble de câbles et de conduits 25 à un poste de commande 24 disposé à l'extérieur de la boîte à eau et dans une zone attenante à l'enceinte 20 du générateur de vapeur, dans l'espace annulaire situé à la périphérie du réacteur nucléaire.

Le poste de commande 24 comporte un coffret de commande et de contrôle électrique et électronique 26, une unité de commande pneumatique 27 et une unité de contrôle et de commande hydraulique 28 reliée à une centrale hydraulique d'alimentation 29.

Les câbles et conduits d'alimentation de l'ensemble de pose et d'extraction de bouchons 22 sont reliés aux éléments du poste de commande par l'intermédiaire d'un connecteur 30.

Un conduit 31 d'alimentation en bouchon de l'ensemble 22 est également relié à un dispositif d'approvisionnement en bouchons situé au poste de commande 24 et à l'unité de commande pneumatique 27.

Un conduit 32 d'évacuation des bouchons usagés est relié à l'ensemble 22 et aboutit à un récipient 33 de récupération des bouchons usagés, à l'intérieur du local du générateur de vapeur.

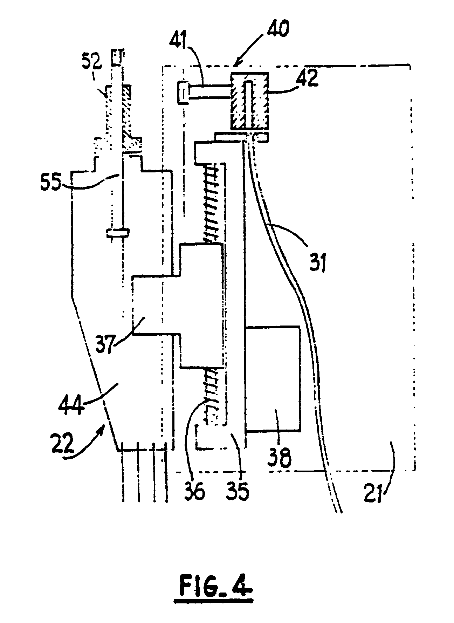

Sur la Fig. 4, on voit l'ensemble du dispositif de pose et d'extraction fixé à l'extrémité du moyen de manutention 21 constitué par exemple par un bras rotatif disposé à l'intérieur du compartiment de la boîte à eau. Le bras 21 porte la partie fixe d'un moyen de déplacement 35 dont la partie mobile 37 solidaire de l'ensemble de pose et d'extraction 22 se déplace dans la direction axiale des tubes 6 qui correspond à la direction verticale sur la Fig. 4. Le moyen de déplacement 35 est constitué par une vis sans fin 36 montée rotative dans la partie fixe et mise en rotation par un moteur 38. La partie mobile 37 est constituée par une douille montée glissante dans la direction verticale sur la partie fixe, en prise avec la vis 36 et solidaire d'un support relié à l'ensemble de pose et d'extraction 22.

Le bras 21 porte également le moyen d'amenée des bouchons 40 comportant un bras 41 monté rotatif autour d'un axe vertical sur le bras 21 et un réceptacle de réception des bouchons 42 situé dans le prolongement de l'extrémité du conduit souple 31.

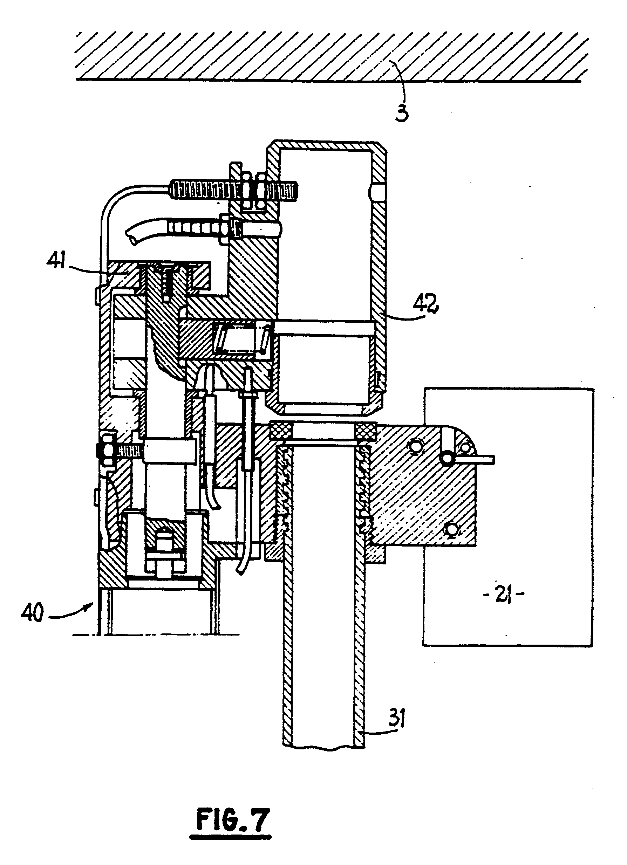

Ce moyen 40 sera décrit de manière plus détaillée en se référant à la Fig. 7.

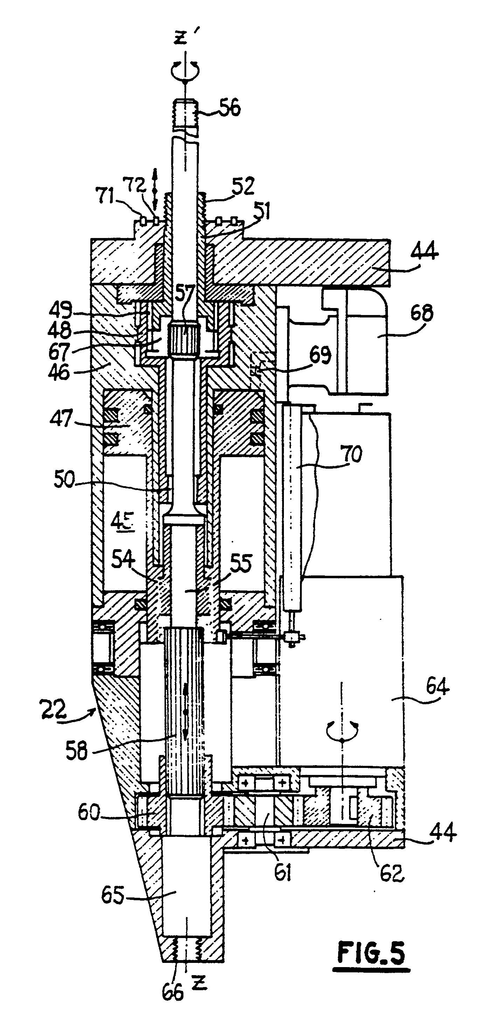

L'ensemble de pose et d'extraction 22 a été représenté sur la Fig. 5.

Cet ensemble comporte un support 44 par l'intermédiaire duquel l'ensemble 22 est relié à la partie mobile 37 du moyen de déplacement 35. Le support 44 porte l'ensemble d'actionnement et de motorisation du dispositif. Cet ensemble comporte un vérin hydraulique dont la chambre 45 est ménagée dans une pièce 46 solidaire du support 44. Le piston 47 du vérin est monté mobile à l'intérieur de la chambre 45, dans la direction axiale Z-Z' qui correspond à la direction verticale sur la Fig. 5.

Le piston 47 et la chambre 45 sont réalisés sous forme annulaire et la pièce 46 comporte un alésage intérieur ayant une partie à grand diamètre et une partie à faible diamètre. Un fourreau 48 est fixé à l'intérieur de l'alésage de la pièce 46 et comporte une partie à faible diamètre et une partie à grand diamètre placées dans les parties correspondantes de l'alésage de la pièce 46. Le fourreau 48 comporte sur sa surface inférieure, dans sa partie à grand diamètre des cannelures 49 et, sur une faible longueur axiale, dans sa partie à faible diamètre, des cannelures 50. Un organe de liaison tubulaire 51 comportant une partie à grand diamètre, pourvu de cannelures externes est engagé par cette partie à grand diamètre cannelée sur les cannelures correspondantes 49 de la surface intérieure de la pièce 48 dans sa partie à grand diamètre. L'organe de liaison 51 comporte une partie à faible diamètre engagée dans un alésage de guidage ménagé dans le support 44 et usiné à son extrémité pour constituer une partie filetée 52 susceptible de s'engager sur la partie taraudée 13 d'un corps de bouchon 17 représenté sur la Fig. 2.

Le piston 47 du vérin hydraulique est solidaire en translation, par l'intermédiaire d'une bague 54, d'une tige 55 montée coulissante dans la direction axiale à l'intérieur du support 44 et passant avec jeu dans l'alésage de la douille 48 et de l'organe de liaison tubulaire 51. La tige 55 comporte une partie filetée 56 à son extrémité située à l'extérieur du support 44, cette partie filetée pouvant être engagée dans la partie taraudée 14 de l'insert 11 ou dans la partie taraudée 15 du noyau 12 d'un bouchon d'obturation 7 tel que représenté sur la Fig. 2.

La tige 55 comporte également une première partie cannelée 57 susceptible de venir s'engager dans les cannelures 50 de la douille 48, lorsque la tige est en position basse et une seconde partie cannelée 58 à son extrémité opposée à la partie taraudée 56. La partie cannelée 58 est engagée sur une partie cannelée correspondante ménagée à la partie intérieure d'un pignon 60 entraîné en rotation, par l'intermédiaire de pignons intermédiaires 61 et 62, par un moteur électrique 64 monté sur le support 44.

Le support 44 délimite une chambre 65 en-dessous de la partie cannelée 58 de la tige 55, cette chambre 65 étant reliée à une conduite d'alimentation en air sous pression. La tige 55 peut donc être déplacée vers le haut, de manière pneumatique, par l'action de l'air sous pression sur la surface inférieure de la partie cannelée 58. Un détecteur 66 fixé à la partie inférieure de la chambre 65 permet de détecter la tige 55 en position basse.

Une chambre annulaire 67 est ménagée autour de la tige 55, à l'intérieur de la douille 48, cette chambre 67 étant reliée à une conduite d'air sous pression. L'alimentation de la chambre 67 en air sous pression permet de déplacer vers le haut de manière pneumatique, l'organe de liaison 51.

Le support 44 porte une servo-valve 68 permettant d'alimenter la chambre 45 du vérin en fluide hydraulique, par l'intermédiaire d'un canal 69 usiné dans la pièce 46.

Le support 44 porte également un capteur de déplacement 70 et un capteur de pression en communication avec la chambre 45 du vérin. Ces capteurs permettent de contrôler le fonctionnement du vérin et en particulier d'enregistrer les déplacements du piston 47.

L'ensemble de pose et d'extraction 22 comporte également deux capteurs 71 et 72 disposés de manière concentrique, sur la face du support mobile 44 dirigée vers la plaque tubulaire lorsque le dispositif est en service. Les capteurs 71 et 72 sont des capteurs de proximité et sont disposés autour de la pièce de liaison 51 destinée à venir en prise avec le corps du bouchon.

Le capteur 71 permet de contrôler la mise en position de l'ensemble 22 par rapport à la plaque tubulaire et le capteur 72 permet de contrôler la présence d'un bouchon à l'intérieur d'un alésage d'un trou de traversée de la plaque tubulaire, avant d'effectuer l'extraction de ce bouchon.

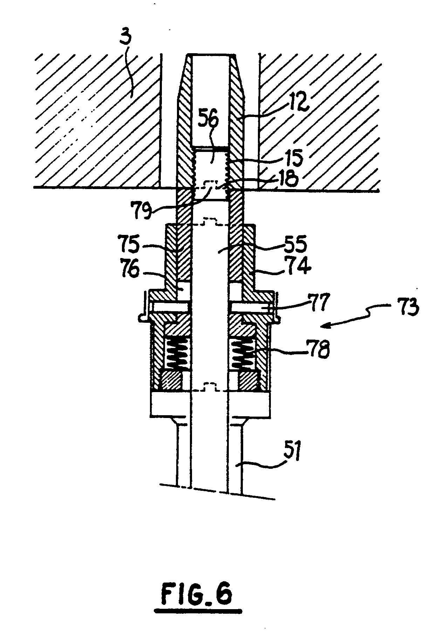

Sur la Fig. 6, on a représenté un dispositif anti-rotation 73 placé à l'extrémité du moyen de liaison 51 de l'ensemble de pose et d'extraction 22. Un tel dispositif anti-rotation est utilisé, lors de l'extraction d'un bouchon, pour empêcher la rotation du noyau 12 lors de sa fixation à l'extrémité 56 de la tige coulissante 55.

Le dispositif anti-rotation 73 est constitué par un corps tubulaire 74 solidaire du dispositif de liaison 51 à son extrémité et par une bague 75 montée coulissante dans la direction axiale, à l'intérieur du corps 74. La bague 75 comporte des lumières 76 dans lesquelles s'engagent des doigts 77 de retenue fixés dans la direction radiale, sur le corps 74.

Des ressorts 78 assurent le rappel vers l'extérieur de la bague 75. La bague 75 comporte des tenons 79 à sa partie supérieure, dont la forme et les dimensions correspondent à celles des encoches 18 du noyau 12 d'un bouchon 7 comme représenté sur la Fig. 2.

Lors de l'extraction d'un bouchon, comme il sera expliqué plus loin, la première opération consiste à extraire le noyau 12 de ce bouchon. Cette extraction est réalisée en utilisant la tige 55 dont la partie filetée 56 vient s'engager sur le taraudage 15 du bouchon 12.

Pendant le vissage de la tige 55, les tenons 79 viennent s'engager dans les encoches 18 du bouchon 12, si le bouchon a tendance à tourner dans son logement. On réalise ainsi un blocage en rotation qui permet d'effectuer le vissage complet de la partie filetée 56 de la tige 55.

Sur la Fig. 7, on voit le moyen 40 d'amenée des bouchons qui comporte un magasin 43 dans le prolongement du conduit 31. L'extrémité du conduit 31 est fixée de façon rigide sur le bras de manutention 21 alors que le magasin 42 est monté rotatif grâce au bras 41, comme il a été expliqué plus haut.

La rotation du bras 41 permet d'amener le magasin, soit dans l'alignement axial de l'extrémité du conduit souple 31, soit dans l'alignement axial du tube 6 sur lequel on effectue une pose ou une extraction de bouchon.

Suivant les phases d'exploitation de l'installation, soit pour la pose, soit pour l'extraction d'un bouchon, on utilisera des magasins 42 de type spécialisé, permettant de recevoir tout ou partie du bouchon à l'état déformé ou à l'état non déformé.

L'amenée des bouchons au dispositif 40 se fait par voie pneumatique, à l'intérieur du conduit 31, par commande d'une soupape d'alimentation en air comprimé. Les bouchons arrivant par le conduit 31 pénètrent dans le magasin 42 en position alignée et sont freinés à l'intérieur du magasin par un dispositif de freinage.

On va maintenant décrire successivement une opération de pose et une opération d'extraction d'un bouchon dans un tube d'un générateur de vapeur, en utilisant le dispositif suivant l'invention.

Ces opérations seront décrites dans un mode de fonctionnement automatique commandé à distance, bien que le dispositif suivant l'invention permette également des interventions manuelles dans la boîte à eau du générateur de vapeur.

Le moyen de manutention 21 est disposé à l'intérieur de la boîte à eau 4 du générateur de vapeur et porte à son extrémité l'ensemble de pose et d'extraction 22, par l'intermédiaire du moyen de déplacement 35. Le dispositif 21 peut être constitué par un bras rotatif monté dans la boîte à eau 4 ou par un dispositif fixé sous la plaque tubulaire du générateur de vapeur, connue de la technique antérieure et désignée sous le nom "d'araignée".

Pour effectuer la pose d'un bouchon, dans un premier temps, on introduit un bouchon 9 dans le magasin 42 placé dans le prolongement du conduit 31. Le bouchon est transporté dans le conduit 31 de façon pneumatique et se trouve automatiquement freiné et mis en place dans le magasin 42 à son arrivée. Cette opération est obtenue par commande d'une électrovanne, depuis le poste de commande 24 de l'installation.

On fait ensuite subir une rotation au magasin 42 renfermant le bouchon, grâce au bras 41, de façon à amener le magasin 42 et le bouchon dans le prolongement axial du tube dans lequel on effectue la pose du bouchon.

L'ensemble 22 est dans sa position la plus basse, la partie mobile 37 du moyen de déplacement 35 étant à l'extrémité inférieure de la vis 36. L'ensemble 22 est d'autre part mis en alignement avec l'axe du tube, en-dessous du magasin 42.

On effectue la montée de l'ensemble 22 grâce au dispositif 35 dont on alimente le moteur 38 de façon à faire tourner la vis 36.

La tige coulissante 55 de l'ensemble 22 est dans sa position la plus basse, la partie cannelée 57 étant engagée dans les cannelures 50 de la douille 48. L'ensemble 22 est placé sous le magasin 42 dans une position telle que la partie filetée d'extrémité 52 du moyen de liaison 51 soit située juste en-dessous de la partie taraudée 13 du corps du bouchon 7 à l'intérieur du magasin 42. Une pression pneumatique est établie dans la chambre 67 et le moteur 64 est mis en marche, ce qui provoque la rotation de la tige 55 et par l'intermédiaire de la zone cannelée 57, de la douille 48 et du dispositif de liaison 51 engagé dans les cannelures 49. Simultanément, de l'air à une pression de six bars est envoyé dans la chambre 67, ce qui provoque la montée du dispositif 51, pendant sa rotation et son vissage dans la partie taraudée 13 du corps 10 du bouchon ; pendant ce vissage, le bouchon est maintenu fixe en rotation, par l'intermédiaire de la partie en saillie 17 engagée dans une encoche correspondante du magasin 42.

Lorsque la liaison entre l'ensemble de pose 22 et le bouchon est réalisée, l'ensemble 22 est descendu en position basse grâce au moyen de déplacement 35. Ce mouvement vers le bas réalise l'extraction du bouchon 7, du magasin 42.

Le magasin chargeur 42 est alors éloigné de l'axe du tube par rotation du bras 41. On réalise alors la montée de l'ensemble 22 portant à son extrémité le bouchon 7, grâce au moyen de déplacement 35, ce qui réalise l'introduction du bouchon 7 dans le tube et son positionnement par rapport à la plaque tubulaire 3. Ce positionnement est contrôlé par le détecteur de proximité 71 qui commande l'arrêt du moyen de déplacement 35, lorsque la position voulue est obtenue. Le bouchon est alors en place à l'intérieur du trou de passage de la plaque tubulaire.

On alimente alors la chambre 45 du vérin dont le piston 47 est en position basse à l'instant initial. On réalise un mouvement d'approche de la tige 55 qui se termine lorsque l'extrémité de la tige est à une distance de l'extrémité inférieure du noyau 12 du bouchon de l'ordre de 2 mm. On commande alors un déplacement du piston 47 d'amplitude parfaitement déterminée, de façon à réaliser une poussée par voie hydraulique sur le noyau 12 et un déplacement parfaitement déterminé de ce noyau 12 à l'intérieur du bouchon 7. Ce déplacement se traduit par une mise en contact avec l'insert 11, puis une dilatation diamètrale du corps 10 du bouchon et un blocage de ce bouchon à l'intérieur du tube.

On alimente alors le vérin dans l'autre sens pour faire redescendre le piston 47 jusqu'au moment où la tige 55 est revenue dans sa position basse, cette position étant repérée grâce au capteur 66. Dans cette position basse, la partie cannelée 57 de la tige 55 est engagée sur les cannelures 50 de la douille 48. La mise en rotation du moteur 64 dans le sens du dévissage permet de dévisser la partie 52 du moyen de liaison 51 et sa séparation d'avec le bouchon.

On commande alors la descente de l'ensemble 22 grâce au moyen de déplacement 35.

L'ensemble 22 peut alors être placé grâce au dispositif de manutention 21, dans l'alignement du tube suivant dont on peut effectuer le bouchage.

On va maintenant décrire une opération d'extraction automatique d'un bouchon placé à l'intérieur d'un tube 6 du générateur de vapeur.

Cette opération d'extraction est effectuée en deux étapes entre lesquelles l'équipement de l'ensemble de pose et d'extraction 22 est légèrement modifié.

La première étape d'une opération d'extraction consiste à enlever le noyau 12 du bouchon 7.

Pour effectuer cette opération, le moyen de liaison 51 de l'ensemble 22 est équipé du dispositif anti-rotation 73 représenté sur la Fig. 6. Le dispositif chargeur-déchargeur 40 est équipé d'un magasin d'évacuation de noyau qui est peut être mis en coincidence avec un conduit souple 32 d'évacuation.

A l'instant initial, l'ensemble 22 est en position basse et dans l'alignement axial du tube dans lequel se trouve le bouchon à extraire. Le piston 47 du vérin et la tige coulissante 55 sont en position haute comme représenté sur la Fig. 5.

On réalise la montée de l'ensemble 22 grâce au moyen de déplacement 35, jusqu'au moment où l'arrêt du moyen 35 est commandé par le détecteur de bouchon 72. L'extrémité de la tige 55 est alors à une distance de la partie inférieure du noyau, de l'ordre de 2 mm.

On réalise le vissage de la partie d'extrémité 56 de la tige 55 sur la partie taraudée 15 du noyau 12, en faisant tourner le moteur 64 dans le sens du vissage et en envoyant de l'air sous pression dans la chambre 65. On réalise ensuite un déblocage du noyau 12 inséré dans le bouchon, en exerçant un effort d'amplitude définie sur la tige 55, par l'intermédiaire du piston 47 du vérin.

On réalise ensuite l'extraction complète du noyau 12 en faisant descendre l'ensemble 22 grâce au moyen de déplacement 35.

On met en place le magasin 42 du chargeur-déchargeur dans l'axe Z-Z' de la tige 55 de l'ensemble 22, lui-même en coincidence avec l'axe du tube. Le magasin 42 du chargeur-déchargeur vient alors s'intercaler entre la plaque tubulaire et l'extrémité de la tige 55 de l'ensemble 22.

On réalise l'introduction du noyau 12 dans le magasin 42 du chargeur-déchargeur par montée de l'ensemble 22 grâce au moyen de déplacement 35.

Lorsque le noyau est en position dans le magasin 42, on réalise le dévissage de la partie 56 de la tige 55 par l'intermédiaire du moteur 64.

Le magasin 42 est mis en coincidence avec l'extrémité du conduit d'évacuation 32 et la machine est remise en position basse.

Le noyau 12 est expulsé du magasin 42 et évacué par voie pneumatique dans le conduit 32, puis dans le récipient de recueil 33.

La tige 55 est remise dans sa position initiale et l'ensemble 22 peut être placé à la verticale du tube suivant, pour réaliser une nouvelle extraction d'un noyau 12.

L'opération d'extraction d'un bouchon 7 comporte une seconde phase dans laquelle on effectue l'extraction du corps de bouchon 10 et de l'insert 11 inséré dans le corps 10.

Pour effectuer cette phase, on utilise l'ensemble 22 comportant le moyen de liaison 51 dont l'extrémité est constituée par une partie filetée 52 et une tige 55 ayant une partie d'extrémité filetée 56 d'une longueur légèrement supérieure de la partie taraudée 14 de l'insert 11. Le dispositif chargeur-déchargeur 40 est équipé d'un magasin 42 d'évacuation pouvant recevoir un bouchon déformé par traction.

A l'instant initial, l'ensemble 22 est en position basse et place de façon que l'axe Z-Z' de la tige 55 soit dans l'alignement de l'axe du bouchon 7 à extraire.

Le piston 47 du vérin est dans une position telle que la tige 55 soit sortie d'une longueur suffisante pour que son extrémité se trouve à une distance d'environ 2 mm de la partie taraudée 14 de l'insert 11, lorsque l'ensemble 22 est venu dans une position haute déterminée par le détecteur de bouchon 72.

On effectue la montée de la machine grâce au moyen de déplacement 35, la fin du déplacement étant déterminée par le détecteur de bouchon 72.

On effectue alors un retrait de l'ensemble 22 par descente sur une longueur de 3 mm.

On réalise le vissage du moyen de liaison 51 sur le corps 10 du bouchon, la fin du vissage étant déterminée par le détecteur de bouchon 72.

On réalise alors le vissage de la tige 55 dans la partie taraudée 14 de l'insert 11.

On effectue un injection de graisse de lubrification dans le corps 10 du bouchon pour faciliter l'extraction de l'insert 11 et éviter son grippage dans le corps 10. Cette injection peut être effectuée grâce à un canal usiné à l'intérieur de la tige coulissante 55 et débouchant dans la zone de cette tige située à l'intérieur du corps 10.

On peut effectuer également cette injection grâce à un dispositif d'injection indépendant, avant toute intervention de l'ensemble 22 sur le bouchon pour son extraction. On effectue, par traction sur la tige 55, une extraction de l'insert 11 sur une longueur faible et déterminée.

On réalise alors un vissage supplémentaire de la partie filetée 56 de la tige 55 dans la partie taraudée 14 de l'insert 11, jusqu'au moment la partie terminale plate de la tige 55 constituant une surface de poussée vient en contact avec la surface intérieure du fond 10a du corps 10 du bouchon 7.

On effectue alors une poussée sur le fond 10a du bouchon, par l'intermédiaire de la tige 55, grâce au piston 47 du vérin 45. On réalise ainsi l'extension du corps 10 du bouchon qui subit une striction assurant sa séparation du tube 6. Pendant cette mise en extension, l'extrémité inférieure du corps 10 constituée par la partie taraudée 13 est maintenue par le dispositif de liaison 51 en appui sur le support 44 de l'ensemble 22.

On déplace alors l'ensemble 22 grâce au moyen 35 jusqu'à sa position basse, ce qui réalise l'extraction du corps 10 et de l'insert 11 du bouchon 7. Pendant cette extraction, la tige 55 continue à exercer grâce au vérin 45, une poussée sur le fond du bouchon retenu sur l'ensemble 22 par le dispositif de liaison 51.

Lorsque l'extraction est réalisée, on déplace le piston 47 du vérin 45 de façon à libérer les contraintes sur la tige 55, ce déplacement étant de l'ordre de 4 mm.

On place alors le magasin 42 du dispositif chargeur-déchargeur 40 dans l'axe Z-Z' de l'ensemble 22 puis on introduit le corps 10 du bouchon et son insert 11 dans le magasin 42 en faisant remonter l'ensemble 22 grâce au moyen de déplacement 35.

Lorsque le corps 10 du bouchon est en place dans le magasin 42, on réalise le dévissage de la tige 55 dont la partie filetée 56 est en prise avec la partie taraudée 14 de l'insert 11.

On effectue alors le retrait de la tige 55 par actionnement du piston 47, puis le dévissage du moyen de liaison 51 qui est ainsi séparé du corps 10 du bouchon.

Le magasin 42 du dispositif chargeur-déchargeur est mis en position d'évacuation dans le prolongement du conduit souple 32.

On réalise, par voie pneumatique, l'expulsion du corps 10 avec son insert 11 dans le conduit 32, puis dans le récipient de recueil 33.

Il apparaît que le dispositif suivant l'invention permet de réaliser les opérations de pose et d'extraction d'un bouchon dans un tube de générateur de vapeur, de façon totalement automatique et commandée à distance et sans endommager le tube, le corps du bouchon étant mis en extension, lors de l'extraction, ce qui se traduit par une striction et un décollement de ce corps de bouchon.

L'invention ne se limite pas aux modes de réalisation qui ont été décrits.

On peut envisager l'utilisation de moyens de liaison entre l'ensemble de pose et d'extraction et les différentes parties du bouchon, différentes de parties filetées situées à l'extrémité de la tige ou du manchon.

On peut imaginer une disposition relative différente des moyens de liaison 51 et de la tige coulissante 55 assurant la liaison avec les différentes parties du bouchon.

Il est bien évident également que l'ensemble de pose et d'extraction pourrait être associé à des moyens automatique d'approvisionnement et d'évacuation de bouchons et à des moyens de manutention commandés à distance, différents de ceux qui ont été décrits.

Le dispositif suivant l'invention peut être également utilisé de façon manuelle.

Pour sa mise en oeuvre, le dispositif de pose et d'extraction doit être équipé de moyens d'adaptation différents, suivant les opérations effectuées et suivant la nature des phases successives de ces opérations.

Il est donc préférable d'effectuer en série les différentes phases des opérations de pose et d'extraction sur l'ensemble des bouchons dont on effectue la pose et l'extraction, pour éviter d'avoir à ressortir le dispositif de la boîte à eau pour effectuer l'adaptation des équipements requis, entre deux opérations effectuées sur des bouchons différents.

L'invention ne s'applique pas exclusivement à la pose et à l'extraction de bouchon dans la boîte à eau d'un générateur de vapeur d'un réacteur à eau sous pression. Ce dispositif peut être utilisé toutes les fois où l'on désire effectuer le bouchage ou le démontage d'un bouchon dans un tube difficilement accessible.

## Revendications

1. Dispositif de pose et d'extraction commandé à distance, d'un bouchon (7) d'obturation d'un tube (6) d'un générateur de vapeur qui comprend une enveloppe (1) à l'intérieur de laquelle une boîte à eau (4) est délimitée par un plaque tubulaire (3) et un faisceau de tubes (6) ayant chacun deux branches rectilignes (6a, 6b) dont les parties d'extrémité sont fixées à l'intérieur de la plaque tubulaire (3) et sont accessibles depuis la boîte à eau (4), le bouchon d'obturation (7) logeable dans une partie d'extrémité du tube (6) à obturer, comportant un corps tubulaire (10) fermé à l'une de ses extrémités par un fond (10a) et un moyen de serrage (11, 12) de forme tubulaire insérable dans le corps (10) du bouchon (7) et le dispositif comportant de manière connue un moyen de manutention (21) disposé dans la boîte à eau (4) pour son déplacement commandé à distance et sa mise en position par rapport à la partie d'extrémité (6a, 6b) du tube (6) dans l'alignement de la direction axiale de cette partie d'extrémité (6a, 6b), caractérisé par le fait qu'il comporte de plus :

— un moyen de déplacement (35) dans la direction axiale (ZZ'), fixé sur le moyen de manutention (21),

— un support (44) fixé sur le moyen de déplacement (35), mobile dans la direction axiale (Z-Z'),

— un vérin ayant une chambre (45) solidaire du support (44) et un piston (47) monté mobile dans la chambre (45) dans la direction axiale (Z-Z'),

— un organe de liaison (51) porté par le support (44) ayant des moyens de fixation amovible (52) au corps du bouchon (10),

— une tige (55) solidaire en translation axiale du piston (47) du vérin (45) montée coulissante axialement dans le support (44) et comportant une partie d'extrémité ayant des moyens de fixation amovible (56) au moyen de serrage (11, 12) du bouchon (10) et une surface d'appui destinée à venir en butée sur le fond (10a) du bouchon (10) pour son extension par poussée,

— ainsi qu'un moyen d'amenée (40) des bouchons (7) depuis l'extérieur de la boîte à eau (4) jusqu'à une position voisine du tube (6) dans son alignement axial.

2. Dispositif de pose et d'extraction suivant la revendication 1, caractérisé par le fait que l'organe de liaison (51) et la tige coulissante (55) comportent des parties de liaison au corps du bouchon (10) et au moyen de serrage (11, 12) respectivement et constituées respectivement par des parties filetées (52, 56).

3. Dispositif de pose et d'extraction suivant la revendication 2, caractérisé par le fait que l'organe de liaison (51) est constitué par un manchon tubulaire ayant des cannelures externes engagées à glissement sur des cannelures (49) d'une douille (48) montée rotative dans le support (44) et comportant un second jeu de cannelures (50), la tige (55) étant montée suivant l'axe (Z-Z') du manchon (52) et de la douille (48) et comportant une première partie cannelée (58) en engagement avec un pignon d'entraînement en rotation (60) et une seconde partie cannelée (57) susceptible de venir en engagement avec les cannelures (50) de la douille (48), dans une position de la tige coulissante (55), de façon à entraîner en rotation l'organe de liaison (51), par l'intermédiaire de la douille (48).

4. Dispositif suivant la revendication 3, caractérisé par le fait qu'une chambre (67) communiquant avec une conduite d'alimentation en air sous pression est ménagée autour de la tige (55), à l'intérieur de la douille (48), à l'une des extrémités de l'organe de liaison (52), de façon à exercer une poussée dans la direction axiale (Z-Z') sur l'organe de liaison (51), par envoi d'air sous pression dans la chambre (67).

5. Dispositif de pose suivant l'une quelconque des revendications 3 ou 4, caractérisé par le fait qu'une chambre (65) est ménagée dans le support (44) dans le prolongement de l'extrémité de la tige (55) opposée à son extrémité de liaison (56), cette chambre (65) communiquant avec une conduite d'alimentation en air sous pression permettant d'exercer une poussée sur la tige (55) dans la direction axiale (Z-Z').

6. Dispositif selon l'une quelconque des revendications 1 à 5, caractérisé par le fait qu'une servo-valve (68) d'alimentation de la chambre (45) du vérin en fluide hydraulique est fixée sur le support mobile (44).

7. Dispositif suivant l'une quelconque des revendications 3 à 6, caractérisé par le fait que le support (44) porte un moteur (64) d'entraînement en rotation du pignon d'entraînement (60) de la tige (55).

8. Dispositif suivant l'une quelconque des revendications 1 à 7, caractérisé par le fait que le support mobile (44) porte sur sa face destinée à venir en vis à vis de la plaque tubulaire (3), au moins un détecteur de proximité (71, 72).

9. Dispositif suivant l'une quelconque des revendications 1 à 8, caractérisé par le fait qu'il comporte de plus un moyen d'injection de lubrifiant dans le corps (10) du bouchon.

10. Dispositif suivant la revendication 9, caractérisé par le fait que le moyen d'injection de lubrifiant comporte un canal d'injection usiné à l'intérieur de la tige (55).

## Patentansprüche

1. Fernbedienbare Vorrichtung zum Setzen und Entfernen eines Verschlußstopfens (7) eines Rohres (6) eines Dampferzeugers, der eine Umhüllung (1) im Inneren derer ein Wasserbehälter (4) durch eine rohrförmige Platte (3) begrenzt wird, und ein Rohrbündel (6) mit jeweils zwei gradlinigen Armen (6a, 6b) aufweist, deren Endabschnitte im Inneren der rohrförmigen Platte (3) befestigt sind und von dem Wasserbehälter (4) aus erreichbar sind, wobei der Verschlußstopfen (7) in einem Endbereich des zu verschließenden Rohres (6) angeordnet werden kann, das einen rohrförmigen Körper (10) aufweist, der an einem seiner Enden durch einen Boden (10a) und einer Klemmeinrichtung (11, 12) von rohrförmiger Gestalt verschlossen wird, die in den Körper (10) des Stopfens (7) einsetzbar ist, und die Vorrichtung in an sich bekannter Weise eine Betätigungseinrichtung (21) aufweist, die in dem Wasserbehälter (4) für ihre ferngesteuerte Bewegung und ihr Instellungbringen bezüglich des Endbereichs (6a, 6b) des Rohrs (6) in der Ausrichtung der axialen Richtung dieses Endbereichs (6a, 6b) angeordnet ist, **dadurch gekennzeichnet**, daß sie weiterhin aufweist :

eine Bewegungseinrichtung (35) in der Axialrichtung (ZZ'), die auf der Betätigungseinrichtung (21) befestigt ist,

eine auf der Bewegungseinrichtung (35) befestigte Stütze (44), die in der axialen Richtung (Z-Z') bewegbar ist,

einen Stelltrieb, der eine Kammer (45), die mit der Stütze (44) verbunden ist, und einen Kolben (47) aufweist, der bewegbar in der Kammer (45) in der Axialrichtung (Z-Z') angeordnet ist,

ein von der Stütze (44) getragenes Verbindungsorgan (51), das entfernbare Befestigungseinrichtungen (52) an dem Stopfenkörper (10) aufweist,

eine in Axialbewegung mit dem Kolben (47) des Stelltriebs (45) verbundene Stange (55), die axial gleitbeweglich in der Stütze (44) angeordnet ist und einen Endbereich aufweist, der entfernbare Befestigungseinrichtungen (56) an der Klemmeinrichtung (11, 12) des Stopfens (10) und eine Anlageoberfläche aufweist, die dazu dient, in Anschlag auf den Boden (10a) des Stopfens (10) für dessen Ausdehnung unter Andrücken zu kommen,

sowie eine Zuführeinrichtung (40) des Stopfens (7) von dem Äußeren des Wasserbehälters (4) aus zu einer Stellung in der Nähe des Rohres (6) in dessen axialer Ausrichtung.

2. Vorrichtung zum Setzen und Entfernen nach Anspruch 1, **dadurch gekennzeichnet,** daß das Verbindungsorgan (51) und die gleitbewegliche Stange (55) Verbindungsbereiche mit dem Stopfenkörper (10) bzw. mit der Klemmeinrichtung (11, 12) aufweisen und entsprechend durch Gewindeabschnitte (52, 56) gebildet sind.

3. Vorrichtung zum Setzen und Entfernen nach Anspruch 2, **dadurch gekennzeichnet,** daß das Verbindungsorgan (51) aus einer rohrförmigen Manschette gebildet ist, die äußere Rillen aufweist in Gleiteingriff auf Rillen (49) einer Hülse (48), die drehbar in der Stütze (44) angeordnet ist und einen zweiten Satz von Rillen (50) aufweist, wobei die Stange (55) gemäß der Achse (Z-Z') der Manschette (52) und der Hülse (48) angeordnet ist und einen ersten gerillten Bereich (58) in Eingriff mit einem Drehantriebsritzel (60) und einen zweiten gerillten Bereich (57) aufweist, der geeignet ist, in Eingriff mit den Rillen (50) der Hülse (48) in einer Stellung der gleitbeweglichen Stange (55) derart zu kommen, daß er das Verbindungsorgan (51) über die Hülse (48) in Drehung versetzt.

4. Vorrichtung nach Anspruch 3, **dadurch gekennzeichnet,** daß eine Kammer (67), die in Verbindung steht mit einer Druckluftzuführleitung, um die Stange (55) im Inneren der Hülse (48) an einem der Enden des Verbindungsorgans (52) derart ausgebildet ist, daß sie einen Druck in axialer Richtung (Z-Z') auf das Verbindungsorgan (51) durch Druckluftzufuhr in die Kammer (67) ausübt.

5. Vorrichtung zum Setzen nach einem der Ansprüche 3 oder 4, **dadurch gekennzeichnet,** daß eine Kammer (65) in der Stütze (44) in der Verlängerung des Endes der Stange (55) entgegengesetzt ihres Verbindungsendes (56) ausgebildet ist, wobei diese Kammer (65) mit einer Druckluftzuführleitung in Verbindung steht, was erlaubt, einen Druck auf die Stange (55) in der axialen Richtung (Z-Z') auszuüben.

6. Vorrichtung nach einem der Ansprüche 1 bis 5, **dadurch gekennzeichnet,** daß ein Servoventil (68) zur Speisung der Kammer (45) des Stelltriebs mit Hydraulikflüssigkeit auf der bewegbaren Stütze (44) befestigt ist.

7. Vorrichtung nach einem der Ansprüche 3 bis 6, **dadurch gekennzeichnet,** daß die Stütze (44) einen Drehantriebsmotor (64) des Antriebsritzels (60) der Stange (55) trägt.

8. Vorrichtung nach einem der Ansprüche 1 bis 7, **dadurch gekennzeichnet,** daß die bewegbare Stütze (44) auf seiner Seite, die dazu bestimmt ist, gegenüber der rohrförmigen Platte (3) zu kommen, wenigstens einen Näherungsdetektor (71, 72) aufweist.

9. Vorrichtung nach einem der Ansprüche 1 bis 8, **dadurch gekennzeichnet,** daß sie weiterhin eine Schmiermitteleinspritzeinrichtung in den Körper (10) des Stopfens aufweist.

10. Vorrichtung nach Anspruch 9, **dadurch gekennzeichnet,** daß die Schmiermitteleinspritzeinrichtung einen Einspritzkanal aufweist, der im Inneren der Stange (55) ausgeformt ist.

## Claims

1. Remotely controlled apparatus for inserting and removing a plug (7) for sealing a tube (6) of a steam generator which comprises a shell (1) inside which a water tank (4) is defined by a tube plate (3) and a bundle of tubes (6) each having two rectilinear arms (6a, 6b) the end parts of which are fastened inside the tube plate (3) and are accessible from the water tank (4), the sealing plug (7) being adapted to be lodged in an end part of the tube (6) to be sealed, comprising a tubular body (10) closed off by a base (10a) at one of its ends and tubular clamping means (11, 12) adapted to be inserted in the body (10) of the plug (7), the apparatus comprising, in known manner, handling means (21) arranged in the water tank (4) for the remotely controlled movement thereof and for positioning thereof relative to the end part (6a, 6b) of the tube (6) in alignment with the axial direction of this end part (6a, 6b), characterised in that it additionally comprises :

— means for moving (35) in the axial direction (ZZ'), fixed to the handling means (21) ;
— a support (44) fastened to the moving means (35), movable in the axial direction (Z-Z') ;
— a jack having a chamber (45) integrally fixed to the support (44) and a piston (47) mounted in the chamber (45) so as to be movable in the axial direction (Z-Z') ;
— a connecting member (51) carried by the support (44) having removable means for fixing (52) to the plug body (10) ;
— a rod (55) which is integrally movable in axial displacement with the piston (47) of the jack (45), which is mounted so that it can slide axially in the support (44), and comprising an end part having removable means for fixing (56) to the clamping means (11, 12) of the plug (10) and a bearing surface intended to abut on the base (10a) of the plug (10) in order to extend it by thrust ; and
— means (40) for delivering plugs (7) from outside the water tank (4) to a position close to the tube (6) in axial alignment therewith.

2. Insertion and removal apparatus according to claim 1, characterised in that the connecting member (51) and the sliding rod (55) comprise parts for connecting to the plug body (10) and to the clamping means (11, 12) respectively and consisting of threaded parts (52, 56) respectively.

3. Insertion and removal apparatus according to claim 2, characterised in that the connecting member (51) consists of a tubular sleeve having external grooves slidably engaging with the grooves (49) of a bush (48) mounted so as to be rotatable in the support (44) and comprising a second set of grooves (50), the rod (55) being mounted along the axis (Z-Z') of the sleeve (52) and of a bush (48) and comprising a first grooved part (58) engaging with a rotary drive pinion (60) and a second grooved part (57) capable of engaging the grooves (50) of the bush (48), in one position of the sliding rod (55), so as to drive the connecting member (51) in rotation by means of the bush (48).

4. Apparatus according to claim 3, characterised in that a chamber (67) communicating with a compressed air supply line is arranged around the rod (55) inside the bush (48), at one of the ends of the connecting member (52), so as to exert thrust in the axial direction (Z-Z') on the connecting member (51), by conveying compressed air into the chamber (67).

5. Insertion apparatus according to either of claims 3 or 4, characterised in that a chamber (65) is defined in the support (44) on an extension of the end of the rod (55) away from its connecting end (56), this chamber (65) communicating with a compressed air supply line which enables thrust to be exerted on the rod (55) in the axial direction (Z-Z').

6. Apparatus according to any one of claims 1 to 5, characterised in that a servo valve (68) for supplying the jack chamber (45) with hydraulic fluid is fixed to the movable support (44).

7. Apparatus according to any one of claims 3 to 6, characterised in that the support (44) carries a motor (64) for rotationally driving the drive pinion (60) for the rod (55).

8. Apparatus according to any one of claims 1 to 7, characterised in that the movable support (44) carries at least one proximity detector (71, 72) on its face which is intended to come opposite the tube plate (3).

9. Apparatus according to any one of claims 1 to 8, characterised in that it additionally comprises means for injecting lubricant into the plug body (10).

10. Apparatus according to claim 9, characterised in that the means for injecting lubricant comprises an injection channel machined inside the rod (55).

FIG.1

**FIG.2**

**FIG_3**

FIG. 4

FIG.5

## FIG. 6

FIG.7